# EUROPEAN PATENT APPLICATION

(11) **EP 2 528 157 A1**
(43) Date of publication of application: **28.11.2012**
(21) Application number: 10843059.6
(22) Date of filing: 18.01.2010
(51) Int. Cl.: H01M 12/08

(54) **LITHIUM AIR CELL**

(71) Applicant: Toyota Jidosha Kabushiki Kaisha, Toyota-shi, Aichi 471-8571 (JP)
(72) Inventor: NISHIKOORI, Hidetaka, Toyota-shi Aichi 471-8571 (JP); NISHINO, Noriaki, Toyota-shi Aichi 471-8571 (JP); SHIRASAWA, Atsushi, Toyota-shi Aichi 471-8571 (JP); NITTA, Iwao, Toyota-shi Aichi 471-8571 (JP); MIZUNO, Fuminori, Toyota-shi Aichi 471-8571 (JP)
(74) Representative: Jackson, Martin Peter
(86) International application number: PCT/JP2010/050505
(87) International publication number: WO 2011/086701

(57) **Abstract**

The present invention is to provide a lithium air battery with excellent cycle characteristics.

Disclosed is a lithium air battery comprising at least an air electrode, a negative electrode and a non-aqueous electrolyte present between the air and negative electrodes, wherein the non-aqueous electrolyte comprises an ionic liquid comprising a cation in which atoms having a larger positive charge than a hydrogen atom are not contained and atoms other than a hydrogen atom have an average charge of 0 or less, and a counter anion thereof.

## Description

### Technical Field

The present invention relates to a lithium air battery with excellent cycle characteristics.

### Background Art

A lithium air battery is a rechargeable battery comprising a metallic lithium or lithium compound as a negative electrode active material and oxygen as a positive electrode active material. Since the positive electrode active material, oxygen, can be obtained from the air, it is not needed to encapsulate a positive electrode active material in the battery. In theory, therefore, the lithium air battery can realize a larger capacity than secondary batteries comprising a solid positive electrode active material.

In a lithium air battery, the reaction described by the following formula (I) proceeds at a negative electrode upon discharging the battery:

2Li→2Li⁺+2e⁻ (I)

Electrons generated by the reaction described by the formula (I) pass through an external circuit, work by an external load, and then reach an air electrode. Lithium ions (Li⁺) generated by the reaction described by the formula (I) are transferred by electro-osmosis from the negative electrode side to the air electrode side through an electrolyte sandwiched between the negative electrode and the air electrode.

Also, upon discharging the battery, the reactions described by the following formulae (II) and (III) proceed at the air electrode:

2Li⁺+O₂+2e⁻→Li₂O₂ (II)

2Li⁺+1/2O₂+2e⁻→Li₂O (III)

Lithium peroxide (Li₂O₂) and lithium oxide (Li₂O) thus produced are stored at the air electrode as solid products.
Upon charging the battery, a reaction which is reverse to the one described by the above formula (I) proceeds at the negative electrode, and reactions which are reverse to the ones described by the above formulae (II) and (III) proceed at the air electrode, thereby regenerating metallic lithium. Because of this, discharging becomes possible again.

In a lithium air battery, generally, a lithium-ion conducting electrolyte is disposed between air and negative electrodes. As a lithium air battery technique using such an electrolyte, a non-aqueous electrolyte air battery technique is disclosed in Patent Literature 1, which comprises a positive electrode, a negative electrode for storing and releasing lithium ions, a non-aqueous electrolyte between the positive and negative electrodes, and a container housing the positive electrode, the negative electrode and the non-aqueous electrolyte and being provided with an air hole for supplying oxygen to the positive electrode, wherein the non-aqueous electrolyte is a hydrophobic ambient temperature molten salt in which lithium salt is dissolved, and a certain amount of polysiloxane having a specific structure is added thereto.

### Citation List

Patent Literature 1: Japanese Patent Application Laid-Open No. 2005-190880

### Summary of Invention

### Technical Problem

Patent Literature 1 discloses data on the number of liquid leakage events per 10 batteries in Examples, which were used in a discharging test, kept in the condition of a temperature of 20°C and a humidity of 60% as they were used for the test, and then observed three months later after the test. However, no consideration and data are disclosed in the patent literature at all, which relate to the stability of a non-aqueous electrolyte itself in a non-aqueous electrolyte air battery upon charging and discharging.
The present invention was achieved in view of the above circumstances. An object of the present invention is to provide a lithium air battery with excellent cycle characteristics.

### Solution to Problem

The lithium air battery of the present invention comprises at least an air electrode, a negative electrode and a non-aqueous electrolyte present between the air and negative electrodes, wherein the non-aqueous electrolyte comprises an ionic liquid comprising a cation in which atoms having a larger positive charge than a hydrogen atom are not contained and atoms other than a hydrogen atom have an average charge of 0 or less, and a counter anion thereof.

Because the lithium air battery of such a structure contains the cation in the non-aqueous electrolyte, the non-aqueous electrolyte is not deteriorated and thus the cycle characteristics of the battery are improved.

An embodiment of the lithium air battery of the present invention is such a structure that the cation has no resonance structure.

In the lithium air battery of the present invention, the cation is preferably selected from the group consisting of N-methyl-N-propyl pyrrolidinium cation, N-butyl-N-methyl pyrrolidinium cation and N,N,N-trimethyl-N-propyl ammonium cation.

The lithium air battery of the present invention comprises at least an air electrode, a negative electrode and a non-aqueous electrolyte present between the air and negative electrodes, wherein the non-aqueous electrolyte comprises a cation determined by a simulation method as a cation in which atoms having a larger positive charge than a hydrogen atom are not contained and atoms other than a hydrogen atom have an average charge of 0 or less, and wherein the simulation method comprises the steps of: optimizing a structure of a target cation by executing a molecular orbital method calculation program with a calculator, calculating a charge distribution of the optimized cation structure, analyzing a result of the charge distribution calculation, and determining from a result of the analysis whether or not the target cation is a cation in which atoms having a larger positive charge than a hydrogen atom are not contained and atoms other than a hydrogen atom have an average charge of 0 or less.

The lithium air battery of such a structure uses in a non-aqueous electrolyte a cation determined by the simulation method as a cation in which atoms having a larger positive charge than a hydrogen atom are not contained and atoms other than a hydrogen atom have an average charge of 0 or less. Therefore, the non-aqueous electrolyte is not deteriorated and thus the cycle characteristics of the lithium air battery are improved.

### Advantageous Effects of Invention

According to the present invention, because the above-described cation is contained in the non-aqueous electrolyte, the electrolyte is not deteriorated and thus the cycle characteristics of the lithium air battery are improved.

### Brief Description of Drawings

FIG. 1 is a view showing an example of the layer structure of the lithium air battery according to the present invention and is also a schematic view of a section of the battery cut along the layer stacking direction.
FIG. 2 is a graph showing a correlation between electrochemical evaluation result and simulation result.
FIG. 3 is a schematic sectional view of a CV cell used in cyclic voltammetry (CV).
FIGs. 4 are views showing an expected reaction pathway in which propylene carbonate, which has been used as a solvent of a non-aqueous electrolyte, is reacted with an oxygen radical to produce lithium alkyl carbonate, and also an expected reaction pathway in which the lithium alkyl carbonate is decomposed to produce carbon dioxide.

### Description of Embodiments

The present invention includes a lithium air battery invention in which a non-aqueous electrolyte comprises a cation having a specific structure (hereinafter may be referred to as the first invention) and a lithium air battery invention in which a non-aqueous electrolyte comprises a cation determined by a simulation method as the cation having the specific structure (hereinafter may be referred to as the second invention). The lithium air batteries of the first and second inventions has an identical, special technical feature in that any of them is a battery which comprises a cation that has the specific structure.
Hereinafter, the first and second inventions will be described in order. Thereafter, matters common to both inventions will be described.

### 1. First Invention

The lithium air battery of the first invention comprises at least an air electrode, a negative electrode and a non-aqueous electrolyte present between the air and negative electrodes, wherein the non-aqueous electrolyte comprises an ionic liquid comprising a cation in which atoms having a larger positive charge than a hydrogen atom are not contained and atoms other than a hydrogen atom have an average charge of 0 or less, and a counter anion thereof.

The inventors of the present invention have found the following: a main cause of deterioration in cycle characteristics of conventional air batteries is that there is a possibility that, due to the reaction at the air electrode of a lithium air battery represented by the formula (II), a non-aqueous electrolyte is reacted with an oxygen radical produced from oxygen in the air.

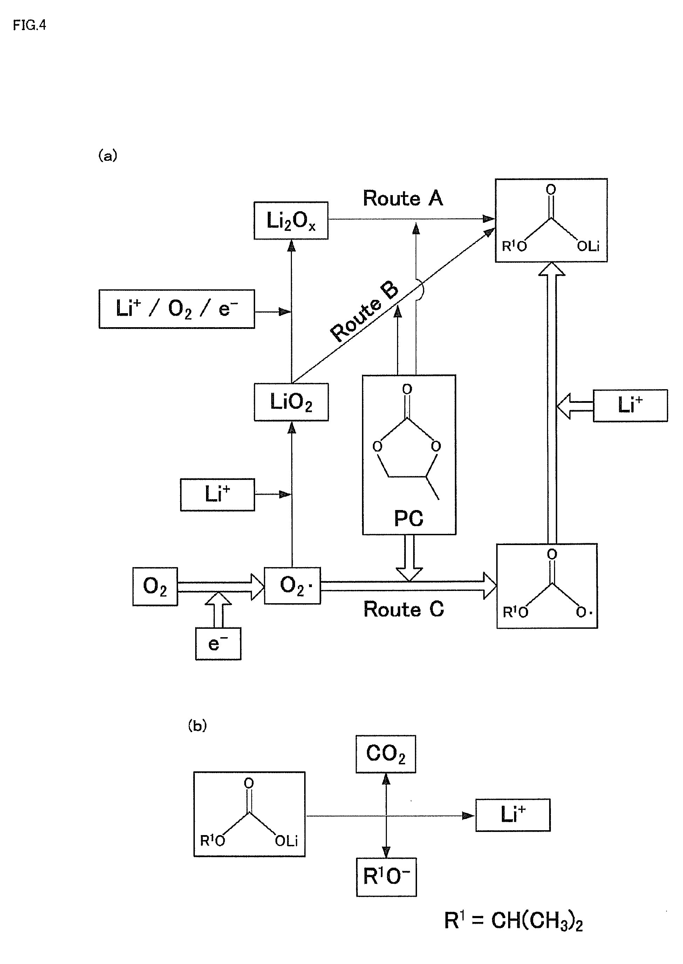

FIGs. 4 are views showing an expected reaction pathway in which propylene carbonate (hereinafter referred to as PC), which has been used as a solvent of a non-aqueous electrolyte, is reacted with an oxygen radical to produce lithium alkyl carbonate, and also an expected reaction pathway in which the lithium alkyl carbonate is decomposed to produce carbon dioxide.
As described by the formula (II), at the air electrode of a metal-air battery, a discharge product, Li₂O₂, is produced by lithium ions (Li⁺), oxygen (O₂) and electrons (e⁻). Also, due to a reaction which is reverse to the reaction described by the formula (II), lithium ions are reproduced at the air electrode of the metal-air battery, thereby producing oxygen.

FIG. 4a is a view showing an expected reaction pathway at the air electrode upon discharging in the case of using PC. FIG. 4b is a view showing an expected reaction pathway at the air electrode upon charging in the case of using PC. The inventors of the present invention have found that, in the case of using PC as an electrolyte, lithium alkyl carbonate (R¹O-C(O)O-Li) is produced and, as with the expected reaction pathway shown in FIG. 4b, carbon dioxide (CO₂) is produced upon charging.
As an expected lithium alkyl carbonate-production pathway upon discharging, for example, there may be mentioned the following: a pathway in which Li₂O, which is an intermediate produced from a lithium ion and an oxygen radical, is reacted with a lithium ion (Li⁺), oxygen (O₂) and/or an electron (e⁻) to produce Li₂Oₓ and the resultant, Li₂Oₓ, is reacted with PC ("Route A" in FIG. 4a); a pathway in which the intermediate, Li₂O, is reacted with PC ("Route B" in FIG. 4a); and a pathway in which a lithium ion is reacted after a reaction of an oxygen radical with PC ("Route C" in FIG. 4a).
Among the expected production pathways, the inventors of the present invention mainly studied a pathway in which a non-aqueous electrolyte is reacted with oxygen radical, which is like Route C that is indicated by a white arrow in FIG. 4a. Moreover, the inventors tried to find a non-aqueous electrolyte which is stable to oxygen radicals.
The inventors of the present invention estimated that a non-aqueous electrolyte comprising a cation in which atoms having a larger positive charge than a hydrogen atom are not contained and atoms other than a hydrogen atom have an average charge of 0 or less, is stable to oxygen radicals, and they completed the present invention based on this estimation.

In the present invention, "cation in which atoms having a larger positive charge than a hydrogen atom are not contained and atoms other than a hydrogen atom have an average charge of 0 or less" preferably refers to that among the atoms constituting the cation, those other than a hydrogen atom have a negative charge each or have no charge each.

In the present invention, "charge" can be calculated by, for example, using Pauling's electronegativity [(a) Pauling, L., J. Am. Chem. Soc., 1932, 54, 3570., (b) Pauling, L., The Nature of the Chemical Bond, Cornell University Press, 1940.] or Mulliken's electronegativity [Mulliken, R. S., J. Chem. Phys., 1934, 2, 782., (b) Mulliken, R. S., J. Chem. Phys., 1935, 3, 573., (c) Pritchard, H. O., Skinner, H. A., Chem. Rev., 1955, 55, 745]. It is widely known that their electronegativities are almost proportional to each other. Pauling's electronegativity is calculated from a large amount of semi-empirical, experimental data, while Mulliken's electronegativity is based on data which is in a quantum-mechanical, theoretically-supported amount.
As a charge distribution analysis method, there may be used Mulliken population analysis, for example.

In the present invention, as described above, from the viewpoint of preventing the non-aqueous electrolyte from deterioration, the cation in which atoms having a larger positive charge than a hydrogen atom are not contained and atoms other than a hydrogen atom have an average charge of 0 or less, is preferably a cation which is stable to oxygen radicals.
For example, a characteristic specific to the cation is that the cation has no resonance structure. This is supposed to be because the cation having a resonance structure has such a property that it is likely to be attacked by oxygen radicals, and a delocalized electron in the resonance structure of the cation is supposed to be involved in such a property.

In particular, cations which can be used in the present invention include an ammonium cation represented by the following formula (1), a piperidinium cation represented by the following formula (2) and a pyrrolidinium cation represented by the following formula (3), for example.

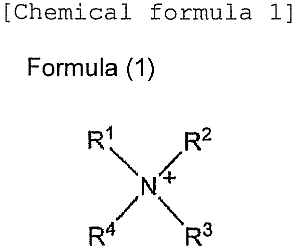

wherein R¹~R⁴ are independent of each other and each of them is selected from the group consisting a hydrogen atom, an aliphatic hydrocarbon group having 1 to 10 carbon atoms, and an aromatic hydrocarbon group having 6 to 10 carbon atoms;

In the formula (1), total heteroatoms contained in R¹ to R⁴, such as an oxygen atom, a nitrogen atom, a sulfur atom, a fluorine atom, a chlorine atom, a bromine atom and an iodine atom, may be about 2 to 5% of the number of atoms of each cation.
Examples of the ammonium cation represented by the formula (1) include N,N,N-trimethyl-N-propyl ammonium cation, N,N,N-trimethyl-N-hexyl ammonium cation, N,N-diethyl-N-methyl-N-propyl ammonium cation, N,N-diethyl-N-methyl-N-isopropyl ammonium cation, N-ethyl-N,N-dimethyl-N-isopropyl ammonium cation and N,N-diethyl-N-methyl-N-methoxyethyl ammonium cation.

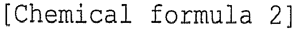

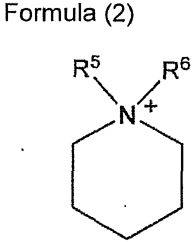

wherein R⁵ and R⁶ are independent of each other, and each of them is selected from the group consisting of an aliphatic hydrocarbon group having 1 to 10 carbon atoms and an aromatic hydrocarbon group having 6 to 10 carbon atoms.

In the formula (2), total heteroatoms contained in R⁵ to R⁶, such as an oxygen atom, a nitrogen atom, a sulfur atom, a fluorine atom, a chlorine atom, a bromine atom and an iodine atom, may be about 4% of the number of atoms of each cation.
Examples of the piperidinium cation represented by the formula (2) include N-methyl-N-propyl piperidinium cation, N-methyl-N-butyl piperidinium cation, N-methyl-N-methoxyethyl piperidinium cation and N-ethyl-N-propyl piperidinium cation.

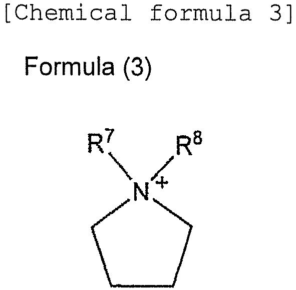

wherein R⁷ and R⁸ are independent of each other, and each of them is selected from the group consisting of an aliphatic hydrocarbon group having 1 to 10 carbon atoms and an aromatic hydrocarbon group having 6 to 10 carbon atoms.

In the formula (3), total heteroatoms contained in R⁷ to R⁸, such as an oxygen atom, a nitrogen atom, a sulfur atom, a fluorine atom, a chlorine atom, a bromine atom and an iodine atom, may be about 5% of the number of atoms of each cation.
Examples of the pyrrolidinium cation represented by the formula (3) include N-methyl-N-propyl pyrrolidinium cation, N-butyl-N-methyl pyrrolidinium cation, N-ethyl-N-butyl pyrrolidinium cation, N-methyl-N-methoxyethyl pyrrolidinium cation and N-ethyl-N-methoxyethyl pyrrolidinium cation.

Among the cations having the above structures, one selected from the group consisting of N-methyl-N-propyl pyrrolidinium cation, N-butyl-N-methyl pyrrolidinium cation and N,N,N-trimethyl-N-propyl ammonium cation, is particularly preferably used in the present invention. Among the three kinds of cations, N,N,N-trimethyl-N-propyl ammonium cation is most preferably used in the present invention, which is a cation that has no cyclic structure such as a piperidine ring or pyrrolidine ring.

Anions which can be used in the present invention include: halide anions such as Cl⁻, Br⁻ and I⁻; boride anions such as BF₄⁻, B(CN)₄⁻ and B(C₂O₄)₂⁻; amide and imide anions such as (CN)₂N⁻, [N(CF₃)₂]⁻ and [N(SO₂CF₃)₂]⁻; sulfate or sulfonate anions such as RSO₃⁻ (hereinafter R refers to an aliphatic hydrocarbon group or aromatic hydrocarbon group), RSO₄⁻, R^{f}SO₃⁻ (hereinafter R^{f} refers to a fluorine-containing halogenated hydrocarbon group) and R^{f}SO₄⁻ ; phosphate anions such as R^{f}₂P(O)O⁻, PF₆⁻ and R^{f}₃PF₃⁻ ; antimonate anions such as SbF₆; and others such as lactate, nitrate ion and trifluoroacetate.
Among these anions, preferably used is an anion in which atoms having a larger positive charge than a hydrogen atom are not contained. An anion is a negatively-charged ion; therefore, naturally, the average charge of atoms other than a hydrogen atom is a negative charge.

Non-aqueous electrolytes usable in the present invention include an ionic liquid itself which comprises a combination of the above-listed cation and anion, and a polymer electrolyte comprising the ionic liquid.
An ionic liquid is a substance which comprises an ionic molecule that is a combination of a cation and an anion, and is also a substance which is liquid at normal temperature (15°C to 25°C).

A supporting salt may be dissolved in the ionic liquid. Examples of the supporting salt include salts comprising a lithium ion and the above-described anion, such as LiPF₆, LiBF₄, LiN(CF₃SO₂)₂, LiCF₃SO₃, LiC₄F₉SO₃, LiC(CF₃SO₂)₃ and LiClO₄. Two or more kinds of such supporting salts may be used in combination. The amount of the supporting salt added to the ionic liquid is not particularly limited; however, it is preferably about 0.1 to 1.5 mol/kg.

The polymer electrolyte which can be used in combination with the ionic liquid preferably comprises a lithium salt and a polymer. As the lithium salt, there may be used the above-listed supporting salts. The polymer is not particularly limited as long as it can form a complex with a lithium salt, and there may be mentioned polyethylene oxide, for example.

### 2. Second Invention

The lithium air battery of the second invention comprises at least an air electrode, a negative electrode and a non-aqueous electrolyte present between the air and negative electrodes, wherein the non-aqueous electrolyte comprises a cation determined by a simulation method as a cation in which atoms having a larger positive charge than a hydrogen atom are not contained and atoms other than a hydrogen atom have an average charge of 0 or less, and wherein the simulation method comprises the steps of: optimizing a structure of a target cation by executing a molecular orbital method calculation program with a calculator, calculating a charge distribution of the optimized cation structure, analyzing a result of the charge distribution calculation, and determining from a result of the analysis whether or not the target cation is a cation in which atoms having a larger positive charge than a hydrogen atom are not contained and atoms other than a hydrogen atom have an average charge of 0 or less.

The lithium air battery of the second invention is a battery in which a cation determined by a specific simulation method as a cation in which atoms having a larger positive charge than a hydrogen atom are not contained and atoms other than a hydrogen atom have an average charge of 0 or less, is contained in a non-aqueous electrolyte.
Hereinafter, the simulation method will be described in detail.

As a precondition for conducting the simulation method, it is necessary to prepare a software which can execute molecular structure optimization and charge calculation, and which can create a molecular model that can makes it possible to analyze the calculation result thereof.
Specific examples of such a software include Gaussian 03 (manufactured by Gaussian, Inc.), Materials Studio (manufactured by Accelrys, Inc.) and Scigress Explorer (manufactured by Fujitsu). Especially in the case of using Gaussian 03, GaussView 3 (manufactured by Gaussian, Inc.) can be used in combination as a pre/post software.
Such a software can be used consistently for executing molecular structure optimization and charge calculation, and analyzing the calculation results. That is, the software can be used as a platform for molecular model creation, calculation and analysis.

The simulation method used in the present invention comprises the steps of: (a) optimizing the structure of a target cation; (b) calculating charge distribution; (c) analyzing a result of the charge distribution calculation and determining whether or not the target cation is a cation in which atoms having a larger positive charge than a hydrogen atom are not contained and atoms other than a hydrogen atom have an average charge of 0 or less. Hereinafter the four steps will be described in order.

### 2-a. Step of optimizing structure of target cation

First, the structure of the target cation is optimized. For the target optimization, there may be used a semi-empirical molecular orbital method such as CNDO/2, INDO, MNDO, AM1 or PM3; a Hartree-Fock method such as a restricted Hartree-Fock method (RHF), a restricted open-shell Hartree-Fock method (ROHF) or an unrestricted Hartree-Fock method (UHF); an ab initio molecular orbital method including Møller-Plesset perturbation method, such as MP2; or a density-functional method such as B3LYP, for example. As the basis function form, there may be used STO-3G function, 3-21G function, 6-21G function, 4-31G function, 6-31G function and 6-311G function, for example.

### 2-b. Step of calculating charge distribution

The charge distribution of the cation model is calculated, of which structure was optimized in the above step (2-a). For the calculation of charge distribution, it is general to use the same calculation method and basis function as those used in the structure optimization of the above step (2-a). However, depending on calculation resources, etc., different calculation methods and/or basis functions may be used in these steps.
To express the charge distribution, there may be used Mulliken charge, Hirshfeld charge or the like.

### 2-c. Step of analyzing a result of charge distribution calculation and step of determining from a result of the analysis whether or not target cation is a cation in which atoms having a larger positive charge than a hydrogen atom are not contained and atoms other than a hydrogen atom have an average charge of 0 or less

As a result of calculating the charge distribution of the cation model in the above step (2-b), a charge value is obtained for each atom of the cation model. Among the charge values thus obtained, those of atoms other than a hydrogen atom are selected. When the charge values of atoms other than a hydrogen atom are 0 or less each, it is determined that the target cation is a cation in which atoms having a larger positive charge than a hydrogen atom are not contained and atoms other than a hydrogen atom have an average charge of 0 or less. Therefore, the target cation is determined to be usable in the non-aqueous electrolyte of the lithium air battery of the present invention.
Meanwhile, among the thus-obtained charge values of atoms other than a hydrogen atom in the target cation, when at least one of the charge values is a positive value, it is determined that the target cation is not a cation in which atoms having a larger positive charge than a hydrogen atom are not contained and atoms other than a hydrogen atom have an average charge of 0 or less. Therefore, the target cation is determined to be unusable in the non-aqueous electrolyte of the lithium air battery of the present invention.

As described above, by using the cation selected preliminarily by the simulation method in the non-aqueous electrolyte, the non-aqueous electrolyte is not deteriorated and thus the cycle characteristics of the lithium air battery are improved.

### 3. Matters common to the first and second inventions

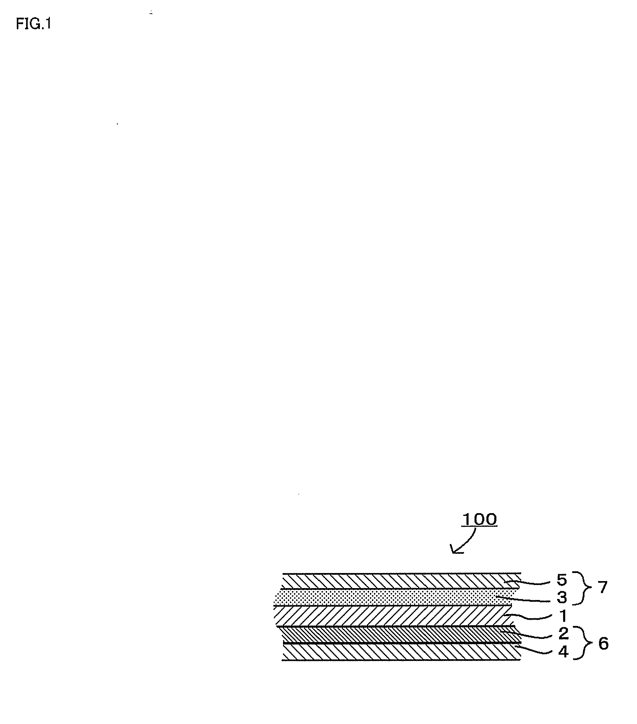

Hereinafter, matters common to the lithium air battery of the first invention and that of the second invention will be described. Hereinafter, "lithium air batter of the first invention and/or lithium air battery of the second invention" may be referred to as "lithium air battery of the present invention."
FIG. 1 is a view showing an example of the layer structure of the lithium air battery according to the present invention and is also a schematic view of a section of the battery cut along the layer stacking direction. The lithium air battery of the present invention is not limited to this example only.
Lithium air battery 100 comprises air electrode 6, negative electrode 7 and non-aqueous electrolyte 1. Air electrode 6 comprises air electrode layer 2 and air electrode current collector 4. Negative electrode 7 comprises negative electrode active material layer 3 and negative electrode current collector 5. Non-aqueous electrolyte 1 is sandwiched between air electrode 6 and negative electrode 7.
The lithium air battery of the present invention comprises the above-described non-aqueous electrolyte which comprises an ionic liquid comprising a cation in which atoms having a larger positive charge than a hydrogen atom are not contained and atoms other than a hydrogen atom have an average charge of 0 or less, and a counter anion thereof. Hereinafter, the components of the lithium air battery of the present invention other than the non-aqueous electrolyte, such as air electrode, negative electrode and other components, will be described in order.

### (Air electrode)

The air electrode of the lithium air battery of the present invention preferably comprises an air electrode layer. In addition to this, the air electrode generally comprises an air electrode current collector and an air electrode lead connected to the air electrode current collector.

### (Air electrode layer)

The air electrode layer in the lithium air battery of the present invention comprises at least an electroconductive material. As needed, the air electrode layer may further comprise at least one of a catalyst and a binder.

The electroconductive material used for the air electrode is not particularly limited as long as it has electrical conductivity. For example, there may be mentioned a carbonaceous material, a perovskite-type electroconductive material, a porous, electroconductive polymer and a porous metal material. In particular, the carbonaceous material may be one having a porous structure or may be one having no porous structure. In the present invention, however, it is preferably one having a porous structure because a large specific surface area and many reaction sites are provided. Specific examples of the carbonaceous material having a porous structure include mesoporous carbon. Specific examples of the carbonaceous material having no porous structure include graphite, acetylene black, carbon nanotubes and carbon fiber. The content of the electroconductive material in the air electrode layer is preferably in the range of 65% by mass to 99% by mass, more preferably in the range of 75% by mass to 95% by mass. If the content of the electroconductive material is too small, the number of reaction sites is decreased and may result in a decrease in battery capacity. If the content of the electroconductive material is too large, the content of the catalyst is relatively smaller and may result in poor catalyst performance.

As the catalyst used for the air electrode layer, for example, there may be mentioned inorganic ceramics such as manganese dioxide and cerium dioxide, organic complexes such as cobalt phthalocyanine, and composite materials thereof. The content of the catalyst in the air electrode layer is preferably in the range of 1% by mass to 30% by mass, more preferably in the range of 5% by mass to 20% by mass. If the catalyst content is too small, the catalyst may not provide sufficient catalyst performance. If the catalyst content is too large, the content of the electroconductive material is relatively smaller and may result in a decrease in the number of reaction sites is decreased and may result in a decrease in battery capacity.
From the point of view that an electrode reaction is performed more quickly, the above-described electroconductive material preferably supports the catalyst.

The air electrode layer is only needed to comprise at least an electroconductive material. Preferably, the air electrode layer further comprises a binder for fixing the electroconductive material. Examples of the binder include polyvinylidene fluoride (PVdF), polytetrafluoroethylene (PTFE) and rubber resins such as styrene-butadiene rubber (SBR rubber). The content of the binder in the air electrode layer is not particularly limited; however, it is preferably 30% by mass or less, more preferably in the range of 1% by mass to 10% by mass.

The thickness of the air electrode layer varies depending on the intended use of the air battery; however, it is preferably in the range of 2 µm to 500 pm, more preferably in the range of 5 µm to 300 µm.

### (Air electrode current collector)

The air electrode current collector in the lithium air battery of the present invention collects current from the air electrode layer. The material of the air electrode current collector is not particularly limited as long as it has electrical conductivity. Examples of the material include stainless steel, nickel, aluminum, iron, titanium and carbon. Examples of the form of the air electrode current collector include a foil form, a plate form and a mesh (grid) form. Among them, a mesh form is preferred in the present invention from the viewpoint of excellent current collection efficiency. In this case, generally, the air electrode current collector in a mesh form is provided inside the air electrode layer. Moreover, the lithium air battery of the present invention may have a different air electrode current collector (such as a current collector in a foil form) which collects charge collected by the air electrode current collector in a mesh form. Also in the present invention, the below-described battery case may also function as an air electrode current collector.
The thickness of the air electrode current collector is preferably in the range of 10 µm to 1,000 µm, more preferably in the range of 20 µm to 400 µm.

### (Negative electrode)

The negative electrode in the lithium air battery of the present invention preferably comprises a negative electrode layer which comprises a negative electrode active material. In addition to this, the negative electrode generally comprises a negative electrode current collector and a negative electrode lead connected to the negative electrode current collector.

### (Negative electrode layer)

The negative electrode layer in the lithium air battery of the present invention comprises a negative electrode active material such as a lithium metal, an alloy having a lithium element, or a metallic oxide or nitride having a lithium element.
Examples of the alloy having a lithium element include a lithium aluminum alloy, a lithium tin alloy, a lithium lead alloy and a lithium silicon alloy. Examples of the metallic oxide having a lithium element include a lithium titanium oxide. Examples of the metallic nitride having a lithium element include a lithium cobalt nitride, a lithium iron nitride and a lithium manganese nitride.
The negative electrode layer of the present invention may comprise two or more kinds of these negative electrode active materials.

The negative electrode layer may be one comprising a negative electrode active material only or one comprising a negative electrode active material and at least one of an electroconductive material and a binder. For example, when the negative electrode active material is in a foil form, the negative electrode layer can be one comprising the negative electrode active material only. When the negative electrode active material is in a powder form, the negative electrode layer can be one comprising the negative electrode active material and a binder. Since the electroconductive material and binder are the same as those described above under "Air electrode", explanation of them is omitted here.

### (Negative electrode current collector)

The material of the negative electrode current collector in the lithium air battery of the present invention is not particularly limited as long as it has electrical conductivity. Examples of the material include copper, stainless steel, nickel and carbon. Examples of the form of the negative electrode current collector include a foil form, a plate form and a mesh (grid) form. In the present invention, the below-described battery case may also function as a negative electrode current collector.

### (Separator)

When the lithium air battery of the present invention has a structure of stacked laminates, each comprising an air electrode, non-aqueous electrolyte and negative electrode stacked in this order, from the viewpoint of safety, a separator is preferably provided between the air electrode of a laminate and the negative electrode of a different laminate. Examples of the separator include a porous membrane of polyethylene, polypropylene or the like and a nonwoven fabric such as resin nonwoven fabric or glass fiber nonwoven fabric.

### (Battery case)

The lithium air battery of the present invention generally comprises a battery case for housing the air electrode, negative electrode, non-aqueous electrolyte and so on. The battery case may be in a coin form, a plate form, a cylinder form, a laminate form, etc. The battery case may be an open battery case or closed battery case. The open battery case is a battery case having a structure in which at least the air electrode layer can be in full contact with the air. On the other hand, when the battery case is a closed battery case, the closed battery case is preferably provided with a gas (air) introduction tube and a gas (air) exhaust tube. In this case, the introduced/exhaust gas preferably has a high oxygen concentration and is more preferably pure oxygen. Upon discharging, it is preferable to increase the oxygen concentration. Upon charging, it is preferable to decrease the oxygen concentration.

### Examples

### 1. Electrochemical evaluation

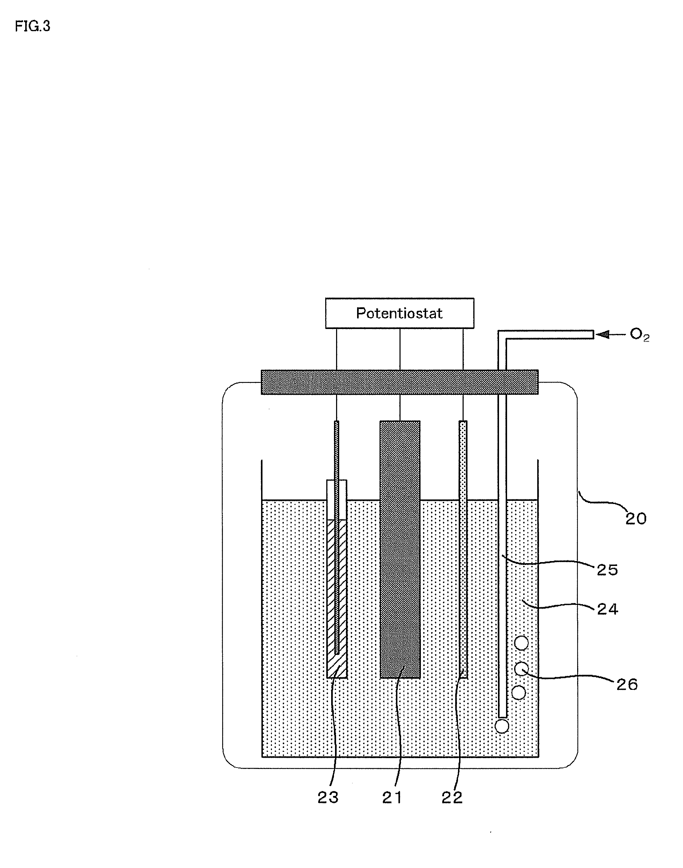

Cyclic voltammetry (CV) was carried out with the device as is schematically shown in FIG. 3 to study the oxidation-reduction of an oxygen radical itself in a sample solution.
As shown in FIG. 3, the CV measuring device is mainly divided into cell 20 housing a sample solution and electrodes and a potentiostat for controlling electrical voltage and current. In cell 20, working electrode 21, counter electrode 22 and reference electrode 23 are disposed so as to be sufficiently immersed in sample solution 24, and the three electrodes are electrically connected to the potentiostat. Also, oxygen introduction tube 25 is disposed so as to be immersed in sample solution 24. From an oxygen supply source (not shown) disposed outside the cell, oxygen is bubbled through sample solution 24 for a fixed time to saturate the sample solution with oxygen. Circle 26 indicates an oxygen bubble.
The detailed structure of the device is described below.

### (Device structure)

Working electrode: ø 3 mm glassy carbon rod electrode
Counter electrode: Ni ribbon
Reference electrode: Ag/Ag⁺
Measurement temperature: Room temperature (15 to 25°C)
Sweep rate: 100 mV/s
Oxygen bubbling time: 30 minutes

As sample solution 24, the following ionic or organic liquid was used:
Example 1:
   N,N,N-trimethyl-N-propylammonium-bis(trifluoromethylsulfonyl )imide (Hereinafter referred to as TMPA-TFSA)
Example 2:
   N-methyl-N-propylpyrrolidinium-bis(trifluoromethylsulfonyl)i mide (Hereinafter referred to as P13-TFSA)
Example 3:
   N-butyl-N-methylpyrrolidinium-bis(trifluoromethylsulfonyl)im ide (Hereinafter referred to as P14-TFSA)
Example 4:
   N-methyl-N-propylpiperidinium-bis(trifluoromethylsulfonyl)im ide (Hereinafter referred to as PP13-TFSA)
Comparative example 1:
   1-Ethyl-3-methylimidazolium-bis(trifluoromethylsulfonyl)imid e (Hereinafter referred to as EMI-TFSA)
Comparative example 2:
   Propylene carbonate (Hereinafter referred to as PC)
Comparative example 3:
   Sulfolane (Hereinafter referred to as SL)

As a reference for indicating the reversibility of an oxygen activating species in oxidation-reduction, CV reversibility is calculated as follows and used as a reference indicating the stability of the sample solution to oxygen radicals: CV reversibility (%)=[{quantity of oxidative electricity of 4 V or less/quantity of reductive electricity of 4 V or less}×100].

### 2. Simulation of sample solution

Ab initio molecular orbital calculation was carried out on the sample solutions of Examples 1 to 4 and Comparative examples 1 to 3 by means of Gaussian03 Revision D.01 to evaluate charge distribution of each molecule. For the sample solutions of Examples 1 to 4 and Comparative example 1, charge distribution evaluation was carried out only on cation.
First, using self-consistent reaction field theory, an approximate model of a target molecule or cation in each sample was created. The structure of the model was optimized by ab initio molecular orbital method (HF/6-31G). Moreover, with the structure of the target molecule or cation subjected to structure optimization, the charge distribution (Mulliken charge) of each atom of the target molecule or cation was calculated by ab initio molecular orbital method (HF/6-31G).

### 3. Correlation between electrochemical evaluation result and simulation result

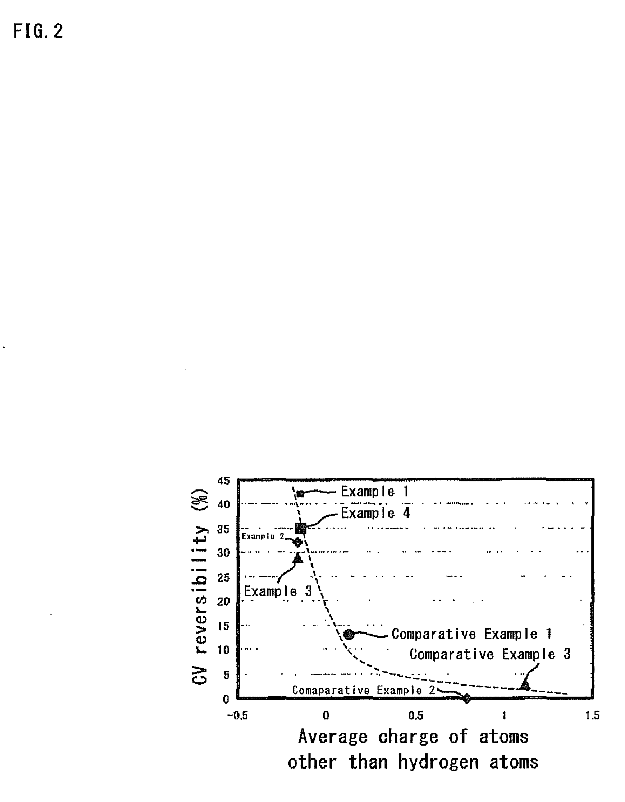

FIG. 2 is a graph showing a correlation between electrochemical evaluation result and simulation result, and it is also a graph with CV reversibility (%) on the vertical axis and the average charge of atoms other than a hydrogen atom on the horizontal axis.
As is clear from the graph, in the simulation, each of the sample solutions of Comparative examples 1 to 3 showed that the average charge of atoms other than a hydrogen atom is a positive value. The reason is as follows. In the sample solution of Comparative Example 1, positive charge is mainly localized on carbon atoms of the imidazole ring in an imidazole cation. In the sample solutions of Comparative examples 2 and 3, positive charge is mainly localized on a carbon atom of the carbonyl part of a molecular structure. Each of the sample solutions of Comparative examples 1 to 3 have a CV reversibility of less than 15%; therefore, it is clear that they have low stability to oxygen radicals. As a result of considering the electrochemical evaluation results and simulation results of Comparative examples 1 to 3, it is clear that a battery containing a molecule or cation in which the average charge of atoms other than a hydrogen atom is a positive value in the non-aqueous electrolyte thereof has low stability to oxygen radicals.

Compared to the above results of the comparative examples, each of the sample solutions of Examples 1 to 4 showed in the simulation that the average charge of atoms other than a hydrogen atom is a negative value. These facts shows that, in the cations in each of the sample solutions of Examples 1 to 4, positive charge is mainly distributed to a hydrogen atom, while negative charge is distributed to a remaining carbon or nitrogen atom. Each of the sample solutions of Examples 1 to 4 has a CV reversibility of 25% or more; therefore, it is clear that they have high stability to oxygen radicals. As a result of considering the electrochemical evaluation results and simulation results of Examples 1 to 4, it is clear that a battery containing a cation in which atoms having a larger positive charge than a hydrogen atom are not contained and atoms other than a hydrogen atom have an average charge of 0 or less in the non-aqueous electrolyte thereof, has high stability to oxygen radicals.

### Reference Signs List

1. Non-aqueous electrolyte
2. Air electrode layer
3. Negative electrode active material layer
4. Air electrode current collector
5. Negative electrode current collector
6. Air electrode
7. Negative electrode
20. CV cell
21. Working electrode
22. Counter electrode
23. Reference electrode
24. Sample solution
25. Oxygen introduction tube
26. Oxygen bubble
100. Metal-air battery

## Claims

1. A lithium air battery comprising at least an air electrode, a negative electrode and a non-aqueous electrolyte present between the air and negative electrodes,
wherein the non-aqueous electrolyte comprises an ionic liquid comprising a cation in which atoms having a larger positive charge than a hydrogen atom are not contained and atoms other than a hydrogen atom have an average charge of 0 or less, and a counter anion thereof.

2. The lithium air battery according to claim 1, wherein the cation has no resonance structure.

3. The lithium air battery according to claim 1 or 2, wherein the cation is selected from the group consisting of N-methyl-N-propyl pyrrolidinium cation, N-butyl-N-methyl pyrrolidinium cation and N,N,N-trimethyl-N-propyl ammonium cation.

4. A lithium air battery comprising at least an air electrode, a negative electrode and a non-aqueous electrolyte present between the air and negative electrodes,
wherein the non-aqueous electrolyte comprises a cation determined by a simulation method as a cation in which atoms having a larger positive charge than a hydrogen atom are not contained and atoms other than a hydrogen atom have an average charge of 0 or less, and wherein the simulation method comprises the steps of: optimizing a structure of a target cation by executing a molecular orbital method calculation program with a calculator, calculating a charge distribution of the optimized cation structure, analyzing a result of the charge distribution calculation, and determining from a result of the analysis whether or not the target cation is a cation in which atoms having a larger positive charge than a hydrogen atom are not contained and atoms other than a hydrogen atom have an average charge of 0 or less.
